# NEUE EUROPÄISCHE PATENTSCHRIFT

(11) **EP 1 719 672 B2**
(45) Veröffentlichungstag und Bekanntmachung des Hinweises auf die Entscheidung über den Einspruch: **15.04.2020**
(45) Hinweis auf die Patenterteilung: 31.05.2017
(21) Anmeldenummer: 05028031.2
(22) Anmeldetag: 21.12.2005
(51) Int. Cl.: B60S 1/38

(54) **Haltebügelloses Wischerblatt für einen Scheibenwischer**
Windscreen wiper blade without yokes
Balai d'essuie-glace sans étriers

(30) Priorität: 06.05.2005 DE 102005021146
(43) Veröffentlichungstag der Anmeldung: 08.11.2006
(73) Patentinhaber: Volkswagen Aktiengesellschaft, 38440 Wolfsburg (DE)
(72) Erfinder: Fangmeier, Wilhelm, 38442 Wolfsburg (DE)
(74) Vertreter: Patentanwälte Bals & Vogel

(56) Entgegenhaltungen:
- EP-A- 0 744 326
- DE-A1- 10 061 328
- DE-U1-202004 020 356
- FR-A1- 2 867 738
- JP-A- 2004 017 910

## Beschreibung

Die Erfindung betrifft ein haltebügelloses Wischerblatt für einen Scheibenwischer für die Front-oder Heckscheibe (Scheibe) eines Fahrzeugs.

Haltebügellose Wischerblätter bestehen im wesentlichen aus einer aus einem gummielastischen Material gefertigten langgestreckten Wischleiste, die üblicherweise ein mit seitlichen Längsnuten versehenes Oberteil und ein mit diesem über zumindest einen Kippsteg verbundenes Unterteil mit einer Wischlippe aufweist, und einem mit dieser verbundenen und gegenüber der Scheibe konkav gekrümmten, federelastischen Trägerelement. Dieses ist insbesondere aus zwei parallelen Federschienen gebildet, die in den im Oberteil ausgebildeten Längsnuten angeordnet sind. Das Trägerelement und die Wischleiste sind über an deren Enden befestigte Abschlusskappen miteinander verbunden und weisen in der Mitte eine Anschlussvorrichtung zu Anordnung an einem Wischerarm eines Scheibenwischers auf. Derartige Wischerblätter sind sog. Flachbau-Wischerblätter mit ästhetischen und fertigungstechnischen Vorteilen. Insbesondere sind diese Wischerblätter weniger aufwändig als herkömmliche Wischerblätter mit einem Haltebügelsystem zur Übertragung der vom Wischerarm ausgeübten Anpresskraft auf die Wischlippe.

Beim Betreiben des Scheibenwischers wird die Wischlippe um den zumindest einen Kippsteg nach der jeweiligen Rückseite des über die Fahrzeugscheibe hin- und herstreichenden Wischerblattes gekippt und am Bewegungs-Umkehrpunkt des Scheibenwischers nach der jeweils anderen, nun die Rückseite bildenden Seite umgelegt. Dieses Umlegen oder auch Umschnappen der Wischlippe ist mit einer störenden Geräuschentwicklung verbunden, die insbesondere durch ein Aufschlagen der jeweiligen Längskante des Unterteils auf die über dieser ausgebildeten Fläche im Bereich des Kippsteges hervorgerufen wird und einen hohen Geräuschpegel im Fahrzeug erzeugt.

Aus der DE 100 61 328 C2 ist ein Wischerblatt mit einem Haltebügelsystem für einen Scheibenwischer bekannt, das aus einer einstückigen, gummielastischen Wischleiste mit einem Oberteil und einem mit diesem über einen Kippsteg verbundenen Unterteil mit einer an letzterem ausgebildeten Wischlippe und einem die Wischleiste halternden, krallenförmige Haltebügel aufweisenden Trägergestell gebildet ist. Zwischen dem Oberteil und dem Unterteil ist beidseits des Kippsteges ein Spalt ausgebildet, an dem die Oberkante des Unterteils parallel zur Unterkante des Oberteils verläuft. In diesem Spalt sind mehrere, über die Wischleiste verteilte Abstandshalter angeformt oder angeordnet, die den Spalt an der Ausbildungs- oder Anordnungsstelle ausfüllen, wobei jeweils zwei gegenüberliegende Abstandshalter als Schenkel einer elastischen Klammer ausgebildet sind, die zwischen jeweils zwei Haltebügeln des Trägergestells das Oberteil der Wischleiste umgreift.

Die Abstandshalter fördern ein Umlegen der Wischlippe am jeweiligen Bewegungs-Umkehrpunkt des Scheibenwischers, so dass diese nicht in der vorher gegebenen (Nachschlepp-)Stellung verbleibt und in der umgekehrten Bewegungsrichtung in dieser Stellung an der Fahrzeugsscheibe entlangschabt und Rattergeräusche verursacht. Allerdings verhindern die Abstandshalter auch, dass das Unterteil nach der Seite zu kippt. Das bedeutet schließlich, dass sich statt des gesamten Unterteils nur die an diesem ausgebildete Wischlippe umlegt und nur diese deformiert und abgewinkelt wird. Dadurch wird die Wischlippe stärker belastet und unterliegt folglich auch einem größeren Verschleiß, da die Wischleiste versteift ist und die vom Wischerarm aufgebrachte Anpresskraft weniger gedämpft auf die an der Fahrzeugscheibe anliegende Wischlippe übertragen wird. Dokument DE 20 2004 020 356 U offenbart ein haltebügelloses Wischerblatt gemäß das erste Teil des Anspruchs 1.

Dokument EP 0 744 326 A offenbart eine Wischlippe mit rechteckförmige Dämpfungsstegen.

Dokument JP 2004 017910 A offenbart ein Wischerblatt mit Haltebügel wobei die Wischlippe konkave Dämpfungsstegen hat. Es ist Aufgabe der Erfindung, ein haltebügelloses Wischerblatt für einen Scheibenwischer nach dem Oberbegriff des Anspruchs 1 so zu gestalten, dass die beim Umlegen des Wischerblattes am jeweiligen Bewegungs-Umkehrpunkt des Wischerblattes erzeugten Umlegegeräusche beseitigt, zumindest jedoch erheblich reduziert sind. Es ist Aufgabe der Erfindung, ein haltebügelloses Wischerblatt für einen Scheibenwischer nach dem Oberbegriff des Anspruchs 1 so zu gestalten, dass die beim Umlegen des Wischerblattes am jeweiligen Bewegungs-Umkehrpunkt des Wischerblattes erzeugten Umlegegeräusche beseitigt, zumindest jedoch erheblich reduziert sind.

Diese Aufgabe wird bei einem haltebügellosen Wischerblatt nach dem Oberbegriff des Anspruchs 1 durch dessen kennzeichnenden Merkmale gelöst. Vorteilhafte Ausgestaltungen sind in den Unteransprüchen aufgeführt.

Die Erfindung besteht darin, dass bei einem haltebügellosen Wischerblatt für einen Scheibenwischer, das ein federelastisches Tragelement und eine mit diesem verbundene und an einer Fahrzeugscheibe mit einer Wischlippe anliegende langgestreckte gummielastische Wischleiste aufweist, die aus einem mit einem Windleitprofil versehenen Oberteil zur Verbindung mit dem Tragelement und einem mit dem Oberteil über zumindest einen Kippsteg verbundenen Unterteil mit der Wischlippe besteht, jeweils in dem zwischen dem Oberteil, dem Unterteil und dem Kippsteg gebildeten Spalt vom Kippsteg nach außen erstreckte Dämpfungsstege angeformt sind, die in einer im Bereich des Kippsteges zwischen dem Oberteil und dem Unterteil angeordneten Schnittebene verjüngt ausgebildet sind. Diese Dämpfungsstege verhindern, dass beim Umkehren der Bewegungsrichtung, verbunden mit einem Umlegen des Unterteils der Wischleiste, die Oberkante des Unterteils gegen die Unterfläche des Oberteils schlägt und Umlegegeräusche erzeugt.

Dabei sind die Dämpfungsstege wenigstens bis zur Mitte des Spaltes erstreckt und können bis zu dessen Rand ausgebildet sein. Die Form der verjüngten Dämpfungsstege ist dabei beliebig, bevorzugt jedoch trapez- oder dreieckförmig oder rund, insbesondere halbkreisförmig, wobei deren Breite am Kippsteg erfindungsgemäß wenigstens der Dicke desselben entspricht.

Die Dämpfungsstege ermöglichen noch eine Deformation des Unterteils im Endbereich des jeweiligen verjüngten Dämpfungssteges, verstärkt jedoch im Bereich zwischen dem freien Ende des jeweiligen Dämpfungssteges und der Ober-/ Außenkante des Unterteils, so dass die vom Wischerarm auf das Wischerblatt aufgebrachte Anpresskraft von dem deformierten Unterteil und der abgeknickten und an der Fahrzeugscheibe anliegenden Wischlippe, ebenfalls insbesondere im Bereich des Dämpfungsstegs, aufgenommen und übertragen wird. Die Dämpfungsstege sind also so ausgebildet, dass sie eine mit einer Geräuschentwicklung verbundene Berührung des Oberteils durch die jeweilige Oberkante des Unterteils bei Aufrechterhaltung einer etwas reduzierten Flexibilität des Unterteils verhindern. Diese verbleibende Flexibilität der Wischleiste, verbunden mit einer Entlastung der Wischlippe, führt zu einer Verschleißminderung an dieser.

Dabei können die Dämpfungsstege in den durch den Kippsteg voneinander getrennten Spalten einander gegenüberliegend oder versetzt zueinander angeformt sein. Letztere Ausbildung hat den Vorteil einer besseren Verteilung der im Betrieb der Scheibenwischeranlage auf das Unterteil und die Wischlippe übertragenen und an der Fahrzeugscheibe wirkenden Anpresskraft, da diese insbesondere über die weniger flexiblen Bereiche übertragen wird. Auf diese Weise werden in den beiden Bewegungsrichtungen der Wischleiste unterschiedliche Bereiche des Unterteils und der Wischlippe besonders belastet und zwar eben die, die jeweils im Bereich eines Dämpfungssteges liegen und weniger flexibel sind. Infolge der in unterschiedlichen Bewegungsrichtungen wechselseitigen Belastung nebeneinander liegender Bereiche wird der Verschleiß an der Wischlippe insgesamt reduziert.

Ebenso können die Dämpfungsstege bei übereinander angeordneten Kippstegen versetzt angeordnet sein. Eine derartige Ausbildung führt ebenfalls zu einer Minimierung der Umlegegeräusche bei Erhaltung einer ausreichenden Flexibilität des Wischerblattes. Kombiniert mit der vorstehend beschriebenen Ausführung, bei der auch die in den gegenüberliegenden Spalten ausgebildeten Dämpfungsstege versetzt zueinander angeordnet sind, ergibt sich bei einer Minimierung der Umlegegeräusche eine weitere Erhöhung des Deformationsvermögens des Unterteils.

Bei allen Ausführungen können die freien Enden der Dämpfungsstege zwischen dem Oberteil und dem Unterteil konkav gewölbt sein. Dadurch wird die Deformation des Unterteils am jeweiligen Stegende auf einen größeren Bereich quer zur Längserstreckung ausgedehnt, ohne dass jedoch die Gefahr eines Anschlagens der Oberkante des Unterteils am Oberteil gegeben ist.

Die Erfindung wird im Folgenden anhand von Ausführungsbeispielen erläutert. In den zugehörigen Zeichnungen zeigen:
- Fig. 1:: ein haltebügelfreies Wischerblatt,
- Fig. 2:: einen Schnitt II - II durch dieses,
- Fig. 3:: einen Ausschnitt aus einem Schnitt III - III durch dieses,
- Fig. 4:: das Wischerblatt während des Betriebes im Schnitt II - II,
- Fig. 5:: eine haltebügelfreies Wischerblatt mit einer anderen Ausführung einer Wischleiste,
- Fig. 6:: einen Schnitt VI - VI durch dieses,
- Fig. 7:: einen Ausschnitt aus einem Schnitt VII - VII durch dieses und
- Fig. 8:: das Wischerblatt während des Betriebes im Schnitt VI - VI.
- Fig. 9:: ein haltebügelfreies Wischerblatt mit einer weiteren nicht erfindungsgemäßen Ausführung einer Wischleiste,
- Fig. 10a:: einen Querschnitt A - A durch dieses,
- Fig. 10b:: einen Querschnitt B - B durch dieses, einen Längsschnitt C - C durch dieses und
- Fig. 10d:: das Wischerblatt in einem Betriebszustand im Schnitt B - B.

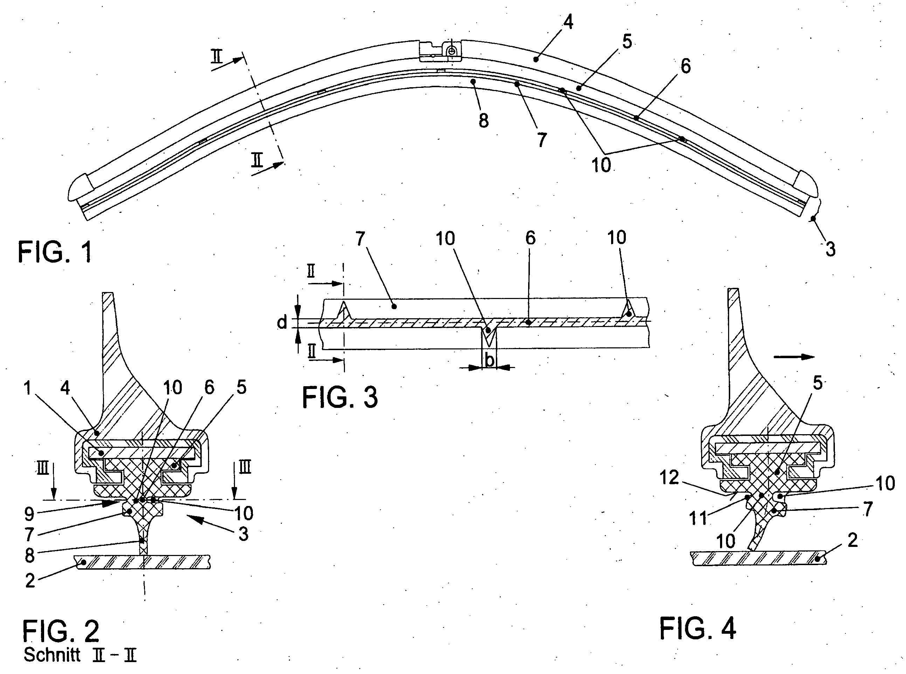

Das in den Fig. 1 bis 3 gezeigte Wischerblatt weist ein federelastisches Tragelement 1 (Fig. 2) und eine mit diesem verbundene und an einer Fahrzeugscheibe 2 (Fig. 2) anliegende langgestreckte gummielastische Wischleiste 3 auf, die aus einem mit einem Windleitprofil 4 versehenen Oberteil 5 zur Verbindung mit dem Tragelement 1 und einem mit dem Oberteil 5 über einen Kippsteg 6 verbundenen Unterteil 7 mit einer Wischlippe 8 besteht. Zwischen dem durch das Oberteil 5, das Unterteil 7 und den Kippsteg 6 gebildeten Spalt 9 sind im Abstand quer zu dessen Längserstreckung nach außen erstreckte Dämpfungsstege 10 angeformt, die vom Kippsteg 6 bis im wesentlichen zum äußeren Rand des Spaltes 9 erstreckt sind. Die Dämpfungsstege 10 haben in einer im Bereich des Kippsteges 6 zwischen dem Oberteil 5 und dem Unterteil 7 angeordneten Schnittebene Dreieckform und sind nach dem Rand des Spaltes 9 zu verjüngt, wobei die Breite b der Dämpfungsstege 10 am Kippsteg 6 der Dicke d desselben (6) entspricht. Dabei sind die Dämpfungsstege 10 in den beiden vom Kippsteg 6 getrennten Spalten 9 versetzt zueinander angeordnet, was in Fig. 3 verdeutlicht ist, und deren freie Enden sind zwischen dem Oberteil 5 und dem Unterteil 7 konkav gewölbt.

Im Wischbetrieb werden der Kippsteg 6 und das Unterteil 7 deformiert. Dabei verhindern die Dämpfungsstege 10, dass die Oberkante 11 des Unterteils 7 gegen die Unterfläche 12 des Oberteils 5 gedrückt wird und insbesondere beim Umlegen des Unterteils 7 bei einer Umkehr der Bewegungsrichtung am Oberteil 5 anschlägt. Dadurch werden die unerwünschten Umlegegeräusche vermieden. Fig. 4 zeigt die Deformation des Unterteils 7 und der Wischlippe 8 im Wischbetrieb, wobei die Bewegungsrichtung durch einen Pfeil angegeben ist.

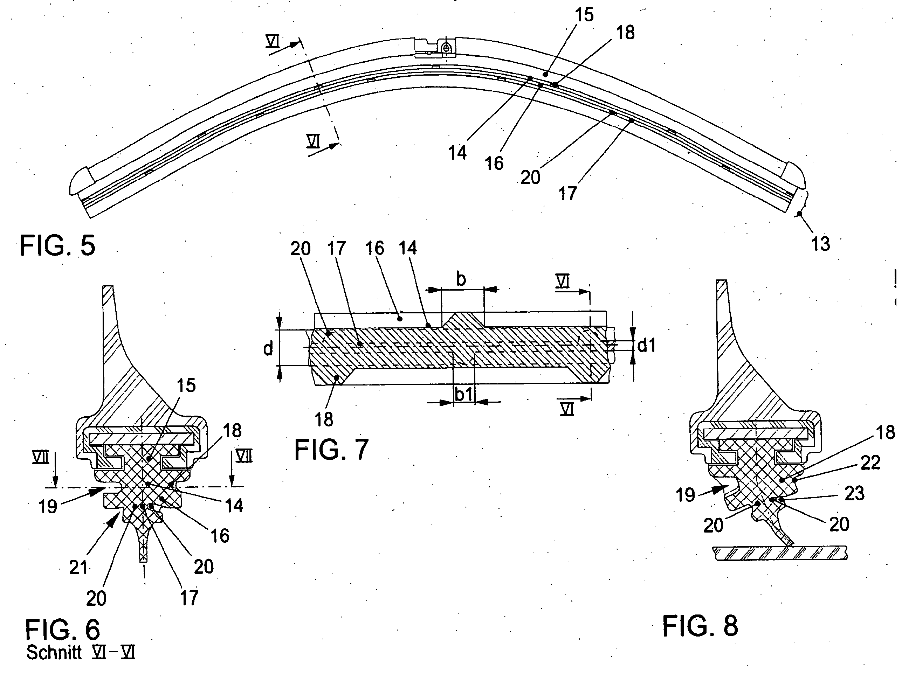

In den Fig. 5 bis 8 ist eine Ausführung eines haltebügelfreien Wischerblattes mit einer anders profilierten Wischleiste 13 dargestellt. Diese weist einen Kippsteg 14 auf, der das Oberteil 15 mit dem Unterteil 16 verbindet, und einen weiteren, im Unterteil 16 angeordneten Kippsteg 17. Im Bereich des Kippsteges 14 sind trapezförmige Dämpfungsstege 18 angeformt, die in den beiden vom Kippsteg 14 getrennten Spalten 19 versetzt zueinander angeordnet sind und im wesentlichen bis zum Rand des jeweiligen Spaltes 19 erstreckt sind, wie in dem Ausschnitt des Schnittes VII - VII in Fig. 7 zu erkennen ist. Die Breite b der Dämpfungsstege 18 entspricht der Dicke d des Kippsteges 14.

Im Bereich des Kippsteges 17 sind ebenfalls Dämpfungsstege 20 angeformt. Diese sind halbkreisförmig verjüngt, und deren Breite b1 entspricht der doppelten Dicke d1 des Kippsteges 17. Diese Dämpfungsstege 20 sind sowohl in den beiden vom Kippsteg 17 getrennten Spalten 21 versetzt zueinander als auch zu den im Bereich des Kippsteges 14 angeformten Dämpfungsstegen 18 versetzt angeordnet. Durch die Dämpfungsstege 18 und 20 wird verhindert, dass im Wischbetrieb die jeweilige Oberkante 22 bzw. 23 an der über dieser ausgebildeten Fläche anschlägt. In Fig. 8 ist die Deformation des Unterteils 16 gezeigt.

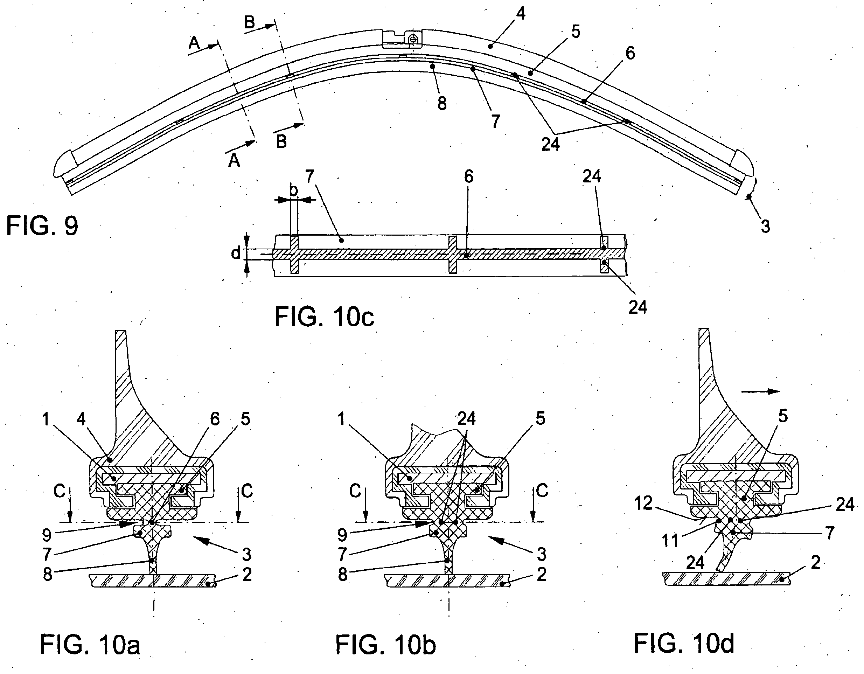

Das in den Fig. 9 und 10a bis 10d gezeigte Wischerblatt unterscheidet sich vom Wischerblatt nach Fig. 1 bis Fig. 4 durch die Form und Anordnung von Dämpfungsstegen 24. Diese sind in den durch den Kippsteg 6 getrennten Spalten 9 einander gegenüberliegend angeordnet und weisen Rechteckform auf. Die Breite b der Dämpfungsstege 24 entspricht dabei der Dicke d des Kippsteges 6, und deren Länge entspricht etwa 75% der Spaltbreite, so dass diese deutlich vor dem äußeren Rand des jeweiligen Spaltes 9 enden. Die freien Enden sind zwischen dem Oberteil 5 und dem Unterteil 7 konkav gewölbt.

### Bezugszeichenliste

- 1: Tragelement
- 2: Fahrzeugscheibe
- 3: Wischleiste
- 4: Windleitprofil
- 5: Oberteil
- 6: Kippsteg
- 7: Unterteil
- 8: Wischlippe
- 9: Spalt
- 10: Dämpfungssteg
- 11: Oberkante
- 12: Unterfläche
- 13: Wischleiste
- 14: Kippsteg
- 15: Oberteil
- 16: Unterteil
- 17: Kippsteg
- 18: Dämpfungssteg
- 19: Spalt
- 20: Dämpfungssteg
- 21: Spalt
- 22: Oberkante
- 23: Oberkante
- 24: Dämpfungssteg
- b: Breite
- b1: Breite
- d: Dicke
- d1: Dicke

## Patentansprüche

1. Haltebügelloses Wischerblatt für einen Scheibenwischer, mit einem dauerelastischen Tragelement (1) und einer mit diesem verbundenen und an einer Fahrzeugscheibe (2) anliegenden langgestreckten gummielastischen Wischleiste (3, 13), die aus einem mit einem Windleitprofil (4) versehenen Oberteil (5, 15), das mit dem Tragelement (1) verbunden ist, und einem mit dem Oberteil (5, 15) über zumindest einen Kippsteg (6, 14, 17) verbundenen Unterteil (7, 16) mit einer Wischlippe (8) besteht, **dadurch gekennzeichnet, dass** verteilt in den zwischen dem Oberteil (5, 15), dem Unterteil (7, 16) und dem Kippsteg (6, 14, 17) gebildeten Spalten (9, 19, 21) vom Kippsteg (6, 14, 17) mehrere nach außen erstreckte Dämpfungsstege (10, 18, 20, 24) angeformt sind, die in einer im Bereich des Kippsteges (6, 14, 17) zwischen dem Oberteil (5, 15) und dem Unterteil (7, 16) angeordneten Schnittebene verjüngt ausgebildet sind, wobei die freien Enden der Dämpfungsstege (10, 18, 20, 24) zwischen dem jeweiligen Oberteil (5, 15) und dem jeweiligen Unterteil (7, 16) konkav gewölbt sind, die Breite (b) der verjüngten Dämpfungsstege (10, 18, 20) am jeweiligen Kippsteg (6, 14, 17) wenigstens der Dicke (d) desselben (6, 14, 17) entspricht.

2. Wischerblatt nach Anspruch 1, **dadurch gekennzeichnet, dass** die Dämpfungsstege (10, 18, 20, 24) wenigstens bis zur Mitte des jeweiligen Spaltes (9, 19, 21) erstreckt sind.

3. Wischerblatt nach Anspruch 1, **dadurch gekennzeichnet, dass** die nach außen verjüngten Dämpfungsstege (10, 18, 20) insbesondere trapezförmig, dreieckförmig oder rund ausgebildet sind.

4. Wischerblatt nach einem oder mehreren der Ansprüche 1 bis 43, **dadurch gekennzeichnet, dass** die Dämpfungsstege (24) in den durch den Kippsteg (6) getrennten Spalten (9) einander gegenüberliegend angeordnet sind.

5. Wischerblatt nach einem oder mehreren der Ansprüche 1 bis 43, **dadurch gekennzeichnet, dass** die Dämpfungsstege (10, 18, 20) in den beiden vom jeweiligen Kippsteg (6, 14, 17) getrennten Spalten (9, 19, 21) versetzt zueinander angeordnet sind.

6. Wischerblatt nach einem oder mehreren der Ansprüche 1 bis 43, **dadurch gekennzeichnet, dass** die Dämpfungsstege (18, 20) übereinander ausgebildeter Spalten (19, 21) versetzt zueinander angeordnet sind.

## Claims

1. Wiper blade without retaining clips for a windscreen wiper, having a permanently elastic supporting element (1) and an elongated rubber-elastic wiper strip (3, 13) which is connected to said elastic supporting element (1) and rests against a vehicle window (2), which wiper strip (3, 13) consists of an upper part (5, 15) provided with a wind deflector profile (4), which upper part (5, 15) is connected to the supporting element (1), and a lower part (7, 16) which is connected to the upper part (5, 15) via at least one tilting web (6, 14, 17) and has a wiper lip (8), **characterized in that,** distributed in the gaps (9, 19, 21) formed between the upper part (5, 15), the lower part (7, 16), and the tilting web (6, 14, 17), a plurality of outwardly extending damping webs (10, 18, 20, 24) are integrally formed by the tilting web (6, 14, 17), which damping webs (10, 18, 20, 24) are tapered in a section plane arranged in the area of the tilting web (6, 14, 17) between the upper part (5, 15) and the lower part (7, 16), wherein the free ends of the damping webs (10, 18, 20, 24) are concavely curved between the respective upper part (5, 15) and the respective lower part (7, 16); the width (b) of the tapered damping webs (10, 18, 20) at the respective tilting web (6, 14, 17) corresponds at least to the thickness (d) of the same (6, 14, 17).

2. Wiper blade according to claim 1, **characterized in that** the damping webs (10, 18, 20, 24) are extended at least to the center of the respective gap (9, 19, 21).

3. Wiper blade according to claim 1, **characterized in that** the outwardly tapering damping webs (10, 18, 20) are in particular trapezoidal, triangular, or round in shape.

4. Wiper blade according to one or more of claims 1 to 3, **characterized in that** the damping webs (24) are arranged opposite one another in the gaps (9) separated by the tilting web (6).

5. Wiper blade according to one or more of claims 1 to 3, **characterized in that** the damping webs (10, 18, 20) are arranged offset from one another in the two gaps (9, 19, 21) separated by the respective tilting web (6, 14, 17).

6. Wiper blade according to one or more of claims 1 to 3, **characterized in that** the damping webs (18, 20) of gaps (19, 21) formed atop one another are arranged offset from one another.

## Revendications

1. Balai d'essuie-glace sans support de fixation pour un essuie-glace, comprenant un élément de support (1) durablement élastique et, reliée à celui-ci, une lame d'essuyage (3, 13) allongée en caoutchouc élastique, placée contre une vitre de véhicule (2), qui se compose d'une partie supérieure (5, 15), munie d'un profil aérodynamique (4), qui est reliée à l'élément de support (1), et d'une partie inférieure (7, 16), présentant une lèvre d'essuyage (8), reliée à la partie supérieure (5, 15) au moyen d'au moins une nervure de basculement (6, 14, 17), **caractérisé en ce que** plusieurs nervures d'amortissement (10, 18, 20, 24), s'étendant vers l'extérieur, sont moulées sur la nervure de basculement (6, 14, 17) et distribuées dans les interstices (9, 19, 21) formés entre la partie supérieure (5, 15), la partie inférieure (7, 16) et la nervure de basculement (6, 14 17), lesquelles nervures sont réalisées sous forme rétrécie dans un plan d'intersection disposé dans la zone de la nervure de basculement (6, 14, 17) entre la partie supérieure (5, 15) et la partie inférieure (7, 16), les extrémités libres des nervures d'amortissement (10, 18, 20, 24) entre la partie supérieure (5, 15) respective et la partie inférieure (7, 16) respective étant incurvées de façon concave, la largeur (b) des nervures d'amortissement (10, 18, 20) rétrécies correspondant, au niveau de la nervure de basculement (6, 14, 17) respective, au moins à l'épaisseur (d) de celle-ci (6, 14, 17).

2. Balai d'essuie-glace selon la revendication 1, **caractérisé en ce que** les nervures d'amortissement (10, 18, 20, 24) s'étendent au moins jusqu'au centre de l'interstice (9, 19, 21) respectif.

3. Balai d'essuie-glace selon la revendication 1, **caractérisé en ce que** les nervures d'amortissement (10, 18, 20) rétrécies vers l'extérieur sont réalisées en particulier sous forme trapézoïdale, triangulaire ou ronde.

4. Balai d'essuie-glace selon l'une ou plusieurs des revendications 1 à 3, **caractérisé en ce que** les nervures d'amortissement (24) dans les interstices (9) séparés par la nervure de basculement (6) sont disposées en regard les unes des autres.

5. Balai d'essuie-glace selon l'une ou plusieurs des revendications 1 à 3, **caractérisé en ce que** les nervures d'amortissement (10, 18, 20) dans les deux interstices (9, 19, 21) séparés par la nervure de basculement (6) respective sont disposées de manière décalée les unes par rapport aux autres.

6. Balai d'essuie-glace selon l'une ou plusieurs des revendications 1 à 3, **caractérisé en ce que** les nervures d'amortissement (18, 20) d'interstices (19, 21) superposés sont disposées de manière décalée les unes par rapport aux autres.
